# EUROPÄISCHE PATENTSCHRIFT

(11) **EP 2 280 852 B1**
(45) Veröffentlichungstag und Bekanntmachung des Hinweises auf die Patenterteilung: **09.05.2012**
(21) Anmeldenummer: 10705348.0
(22) Anmeldetag: 23.02.2010
(51) Int. Cl.: B60S 3/00, B60S 3/04

(54) **FAHRZEUGBEHANDLUNGSANLAGE UND VERFAHREN ZU DEREN BETRIEB**
VEHICLE TREATMENT SYSTEM AND METHOD FOR OPERATING THE SAME
INSTALLATION DE TRAITEMENT DE VÉHICULES ET PROCÉDÉ POUR SON FONCTIONNEMENT

(30) Priorität: 17.04.2009 DE 102009017569
(43) Veröffentlichungstag der Anmeldung: 09.02.2011
(73) Patentinhaber: WashTec Holding GmbH, 86153 Augsburg (DE)
(72) Erfinder: AUER, Robert, 86391 Stadtbergen (DE)
(74) Vertreter: Charrier, Rapp & Liebau
(86) Internationale Anmeldenummer: PCT/EP2010/052285
(87) Internationale Veröffentlichungsnummer: WO 2010/118908

(56) Entgegenhaltungen:
- WO-A1-99/61295
- WO-A1-03/082642

## Beschreibung

Die Erfindung betrifft eine Fahrzeugbehandlungsanlage nach dem Oberbegriff des Anspruchs 1 sowie ein Verfahren zu deren Betrieb nach dem Oberbegriff des Anspruchs 11.

Bei bekannten Fahrzeugbehandlungsanlagen, insbesondere Fahrzeugwaschanlagen mit Selbstbedienung, muss der Fahrer das zu behandelnde Fahrzeug in eine vorgegebene Behandlungsposition fahren. Dort wird das Fahrzeug abgestellt, der Fahrer steigt aus dem Fahrzeug aus und startet das Behandlungsprogramm in der Regel an einer hierfür vorgesehenen Eingabevorrichtung an der Fahrzeugbehandlungsanlage. Anschließend fährt ein Behandlungsportal mit daran angeordneten Behandlungseinrichtungen, z.B. rotierende Horizontal- und Vertikalwaschbürsten oder Hochdruckreinigungseinrichtungen, an der Fahrzeugfront beginnend ein- oder mehrmals über das Fahrzeug hinweg zum Fahrzeugheck und führt das eingestellt Behandlungsprogramm aus. Um eine optimale Behandlung zu erzielen, muss das Fahrzeug hierzu möglichst genau in die vorgegebene Behandlungsposition gebracht werden, in der Regel bis zu einer vorgegebenen Stoppstellung in Einfahrrichtung des Fahrzeugs und zentriert zur lichten Behandlungsweite zwischen Portalsäulen des Behandlungsportals quer zur Einfahrrichtung des Fahrzeugs.

Bei derartigen Fahrzeugbehandlungsanlagen muss das Fahrzeug aber - anders als bei Behandlungsstraßen, durch die das Fahrzeug zwangsgeführt und fremdangetrieben transportiert wird - vom Fahrer selbst möglichst genau in der Behandlungsposition positioniert werden. Viele Fahrer haben jedoch große Schwierigkeiten, das Fahrzeug sauber in die Behandlungsposition einzufahren. Demzufolge wurden bereits zahlreiche Versuche unternommen, den Fahrer durch unterschiedlichste Einfahrhilfen in die Behandlungsposition zu lotsen.

Eine einfache Vorrichtung, um dem Fahrer bei der Positionierung des Fahrzeugs in die Behandlungsposition zu helfen, geht aus der JP 60128047 A hervor, die eine Fahrzeugwaschanlage mit einem Waschportal betrifft. Um ein Fahrzeug dort in die richtige Behandlungsposition zu bringen, sind im Einfahrbereich der Fahrzeugwaschanlage auf dem Boden im Bereich der Räder des einfahrenden Fahrzeugs vier Reihen von Knopfmarkierungen angeordnet. Damit der Fahrer die Stellung seines Fahrzeugs zu diesen Knopfmarkierungen beim Einfahren erkennen kann, sind an senkrecht stehenden Portalsäulen des Waschportals sowie der diese Portalsäulen verbindenden quer verlaufenden Portaltraverse Spiegel angeordnet. Bei dieser einfachen Ausführung besteht ein großer Nachteil darin, dass sich durch die feststehenden Spiegel während des Einfahrens ständig der Betrachtungswinkel zwischen Fahrer, Spiegeln und den Knopfmarkierungen und Fahrzeug ändert. Hierdurch ändern sich ständig die in den Spiegeln erkennbaren Spiegelbilder der Knopfmarkierungen und des Fahrzeugs, so dass der Fahrer schnell verwirrt wird. Fährt das Fahrzeug falsch ein, muss also während der Einfahrt die Fahrrichtung verändert werden, so ändern sich die Spiegelbilder zusätzlich. Auch haben die meisten Fahrer beim seitenrichtigen Zuordnen der "spiegelverkehrt" angezeigten Fahrzeugbewegungen Probleme. Hierdurch gehen die Lenkkorrekturen oft in die falsche Richtung, die Fehlstellung des Fahrzeugs wird noch verstärkt. Die Einfahrhilfe mit Spiegeln weist zusätzlich den Nachteil auf, dass bei nicht einheitlichem Lichteinfall in der Fahrzeugwaschanlage oder durch Lichtreflexionen von den Fahrzeugoberflächen und Fahrzeugscheiben Licht durch die Spiegel zum Fahrer hin reflektiert wird, so dass er kurzzeitig oder wiederkehrend geblendet wird. In der feuchten Umgebung einer Fahrzeugwaschanlage kommt noch hinzu, dass die Spiegel schnell beschlagen oder durch Wassertropfen verunreinigt werden, so dass die Spiegelbilder gar nicht oder nur noch schemenhaft zu erkennen sind.

Eine alternative, gattungsgemäße Einfahrhilfe ist in der EP 1 090 235 B1 bzw. WO 99/61295 A1 offenbart. Dort wird mit einer aufwändigen Messanordnung die Fahrzeugsposition des einfahrenden Fahrzeugs exakt bestimmt. Mit diesen Positionsdaten und in der Steuerung der Fahrzeugswaschanlage abgelegten Wunschpositionsdaten werden Fahrrichtungshinweise berechnet und dem Fahrer dann angezeigt, in welche Richtung er lenken muss, um sein in falscher Richtung einfahrendes Fahrzeug richtig zu positionieren. Derartig komplexe Systeme erfordern ein hohes Maß an Mess- und Rechenaufwand, da die Fahrrichtungshinweise in Echtzeit ermittelt und angezeigt werden müssen. Zudem hat sich herausgestellt, dass die Fahrer der einfahrenden Fahrzeuge die angezeigten Fahrrichtungshinweise oft falsch interpretieren oder zu stark darauf reagieren und die Lenkung übersteuern. Insbesondere das Übersteuern hat bei dem kurzen Einfahrbereich einer Fahrzeugbehandlungsanlage die Folge, dass das Fahrzeug deutlich von der gewünschten Behandlungsposition abweichend eingefahren wird und meist durch mehrmaliges Hin- und Herlenken der Positionsfehler sogar noch verstärkt wird. Dieser kann dann oft nur durch Ausfahren aus der Behandlungsanlage und erneutes Einfahren behoben werden. Meist wird ein Fahrzeug aufgrund dieser Einfahrhilfen schlechter positioniert, als wenn keine Einfahrtshilfe vorhanden wäre.

Aus der DE 20 2008 003 961 U1 ist eine Fahrzeugbchandlungsanlage mit einem Gehäuse bekannt, welches eine oder mehrere Anzeigeeinrichtungen, z.B. in Form eines Flachbildschirms aufweist. In der Anzeigeeinrichtung können Anzeigen von Fahrzeugbehandlungsprogrammen, Reklamespots, Warenangebote des Anlagenbetreibers, Fahrzugbehandlungstipps, aktuelle Bilder der durchgeführten oder Anleitungen zur Durchführung der Fahrzeugbehandlung angezeigt werden. Als Einfahrthilfe weist diese Fahrzeugbehandlungsanlage jedoch nach wie vor die oben beschriebenen, an sich bekannten Hinweisleuchten in Form von Vor- und Zurückfahrpfeilen oder eine STOP-Leuchte auf, welche zu den oben beschriebenen Problemen beim Einfahren eines Fahrzeug führen.

Der Erfindung liegt deshalb die Aufgabe zugrunde, eine Fahrzeugbehandlungsanlage sowie ein Verfahren zu deren Betrieb bereitzustellen, welche die oben genannten Nachteile überwinden und mit einfachen, schnell erfassbaren Mitteln dem Fahrern eines zu behandelnden Fahrzeugs das Einfahren in die richtige Behandlungsposition einer Fahrzeugbehandlungsanlage erleichtern.

Diese Aufgabe löst die Erfindung durch eine Fahrzeugsbehandlungsanlage mit den Merkmalen des Anspruchs 1 und ein Verfahren zu deren Betrieb mit den Merkmalen des Anspruchs 11. Vorteilhafte Ausgestaltungen und zweckmäßige Weiterbildungen der Erfindung sind in den abhängigen Ansprüchen angegeben.

Eine erfindungsgemäße Fahrzeugbehandlungsanlage ist gekennzeichnet durch eine für einen Fahrer des Fahrzeugs während der Einfahrt sichtbare Anzeigevorrichtung zur Anzeige der Aufnahme und mindestens einer Markierung. Ein erfindungsgemäßes Verfahren zum Betrieb einer Fahrzeugbehandlungsanlage ist gekennzeichnet durch die Schritte a) Erzeugen einer Aufnahme des Einfahrbereichs und Fahrzeugs mit der Kamera, und b) Anzeigen der Aufnahme und mindestens einer Markierung in der Anzeigevorrichtung. Durch die schnell erfassbare Anzeige des Fahrzeugs in der Anzeigevorrichtung bezüglich der Markierung kann der Fahrer das Fahrzeug schnell, kontrolliert und vor allem an den Grad einer evtl. Fehlstellung angepasst in die gewünschte Behandlungsposition bringen.

Bevorzugt kann die die Kamera oberhalb des Einfahrbereichs angebracht werden, um somit auf einfache Weise eine Draufsicht auf den Einfahrbereich, das Fahrzeug und die Markierung zu ermöglichen.

Die Kamera kann bevorzugt zum Aufnehmen bewegter Bilder eingerichtet sein, z.B. als digitale Videokamera, die eine kontinuierliche digitale Aufnahme des Einfahrbereichs erzeugt. Maßgeblich ist, dass die Kamera den Einfahrvorgang des Fahrzeugs mit ausreichender zeitlicher Auflösung aufnehmen kann, beispielsweise mit 12 bis 15 Bildern pro Sekunde.

Die Markierung kann vorteilhaft ganz oder zum Teil physikalisch im Einfahrbereich angebracht sein, beispielsweise in den Boden der Fahrzeugbehandlungsanlage eingelassen sein. Hierdurch kann der Fahrer in gewohnter Weise die Markierung als Einfahrhilfe nutzen.

Zusätzlich oder alternativ kann die Markierung ganz oder zum Teil virtuell in die durch die Kamera aufgenommene Aufnahme ortsrichtig eingeblendet werden. Hierdurch kann die Markierung immer gleichermaßen klar und deutlich erkennbar in der Anzeigevorrichtung angezeigt werden. Eine schlechte Ausleuchtung des Einfahrbereichs oder ein stark verschmutzter Boden des Einfahrbereichs beeinflussen die Anzeige nicht. Auch kommt es dann nicht auf die Qualität der Aufnahme an. Hierdurch kann der von der Kamera aufzunehmende Bereich verkleinert werden, so dass die Kamera bei gleicher Kameraauflösung eine Aufnahme mit höherer Auflösung liefert. Alternativ kann bei reduzierter Kameraauflösung die von der Kamera an die Anzeige zu übertragende Datenmenge verringert werden. Auch können hierdurch vom Fahrzeug verdeckte, für die Kamera nicht sichtbare Bereiche der Markierung dennoch angezeigt werden.

Die Markierung kann vorzugsweise eine am in Einfahrrichtung vorderen Ende des Einfahrbereichs quer zur Einfahrrichtung verlaufende Stoppmarkierung umfassen. Vorteilhaft hierbei ist, dass der Fahrer die Stoppmarkierung in der Anzeigevorrichtung auch dann noch erkennen kann, wenn sie aufgrund der Motorhaube des Fahrzeugs von der Fahrerposition aus nicht mehr erkennbar ist.

Die Markierung kann mindestens eine längs der Einfahrrichtung verlaufende Einfahrmarkierung umfassen, z.B. einen zentralen breiten Längsstreifen, auf dem das Fahrzeug entlangfährt.

Alternativ kann die Markierung zwei längs der Einfahrrichtung verlaufende Einfahrmarkierungsstreifen aufweisen, die symmetrisch zu einer parallel zur Einfahrrichtung und zentriert zum Behandlungsportal verlaufenden Zentralebene ausgerichtet sind. Derartige Einfahrmarkierungsstreifen wirken quasi als Einfahrtrichter, selbst wenn sie nicht trichterförmig aufeinander zulaufen. Die Einfahrmarkierungsstreifen können bevorzugt jeweils mindestens zwei in Einfahrrichtung verlaufende, optisch unterschiedlich ausgestaltete Streifen aufweisen, so dass der Fahrer leicht feststellen kann, ob er das Fahrzeug mittig zur Zentralebene lenkt oder mit seitlichem Versatz. Ist die Einfahrmarkierung oder Einfahrmarkierungsstreifen am Boden des Einfahrbereichs angebracht, dient sie als zusätzliche Einfahrhilfe. Auch kann in diesem Fall auf eine Einblendung virtueller Markierungen in die Aufnahme verzichtet werden.

In einer vorteilhaften Ausgestaltung der Erfindung kann die Anzeigevorrichtung ein im Fahrzeug vorgesehenes Bildschirmsystem aufweisen, wobei die Aufnahme sowie die Anzeige der Markierung drahtlos an das Bildschirmsystem übertragen werden. Hierdurch können beispielsweise ein Bildschirmsystem eines Navigationsgeräts im Fahrzeug als Anzeigevorrichtung verwendet werden, dessen Benutzung dem Fahrer bereits vertraut ist.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine schematische Vorderansicht einer erfindungsgemäßen Fahrzeugbehandlungsanlage von einer Einfahrseite aus, mit einer in
- **Fig. 1a**: gezeigten vergrößerten Detailansicht einer an der Fahrzeugbehandlungsanlage angebrachten Anzeigevorrichtung;
- **Fig. 2**: eine schematische Draufsicht auf die Fahrzeugbehandlungsanlage aus Fig. 1 mit einem Fahrzeug im Einfahrbereich in einer ersten Position;
- **Fig. 3**: die schematische Draufsicht aus Fig. 2 mit dem Fahrzeug im Einfahrbereich in einer zweiten Position.

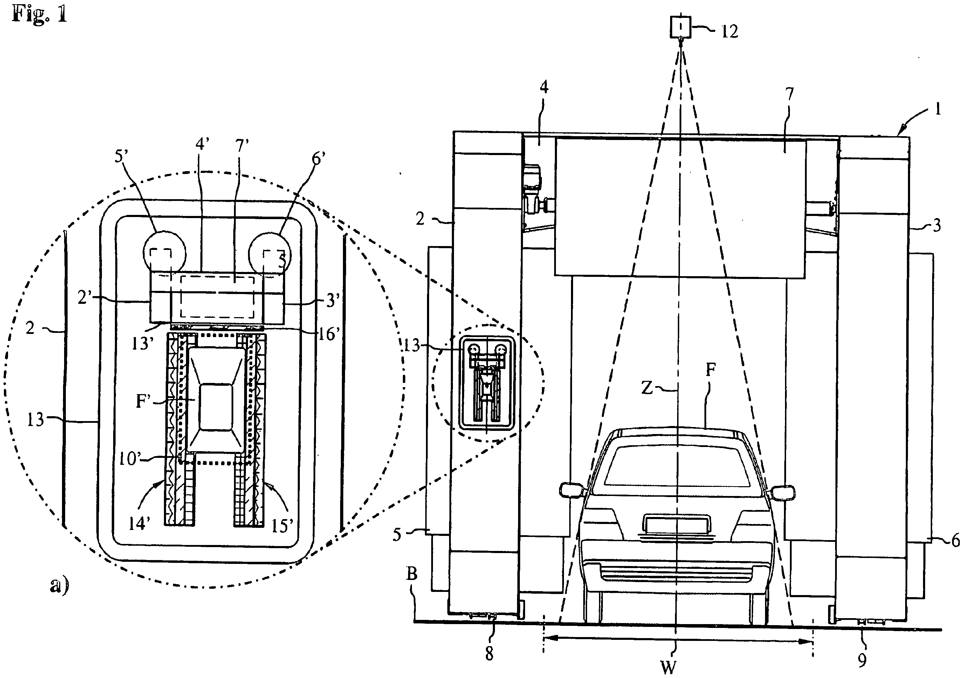

Fig. 1 zeigt eine schematische Vorderansicht einer als Fahrzeug-Portalwaschanlage ausgebildeten Fahrzeugbehandlungsanlage von einer Einfahrseite mit eingefahrenem Fahrzeug F aus. Die Ausbildung derartiger Portalwaschanlagen ist dem Fachmann grundsätzlich geläufig.

Die Portalwaschanlage weist ein als Waschportal 1 ausgebildetes Behandlungsportal mit zwei senkrechten Portalsäulen 2 und 3 auf, die durch eine waagrechte Portaltraverse 4 miteinander verbunden sind. Am Waschportal 1 sind zwei senkrecht stehende, rotierend antreibbare Vertikalwaschbürsten 5 und 6 angeordnet, die quer zur Einfahrrichtung E an der Portaltraverse 4 bewegbar sind, um Front, Seiten und Heck eines zu waschenden Fahrzeugs F zu reinigen. Zwischen den Portalsäulen 2 und 3 ist eine höhenbewegliche, rotierend antreibbare Horizontalwaschbürste 7 angeordnet, um Front, waagrechte Oberflächen wie Motorhaube, Windschutzscheibe, Dach, Heckscheibe etc sowie Heck des Fahrzeugs F zu reinigen. Das Waschportal 1 ist auf Rollenanordnungen 8 und 9 auf in Fig. 1 nicht dargestellten Schienen längs einer in Fig. 1 senkrecht auf der Zeichnungsebene stehenden Einfahrrichtung E verfahrbar. Eine lichte Behandlungsweite W begrenzt seitlich einen Behandlungsbereich 10 zwischen den Portalsäulen 2 und 3, in dem das Fahrzeug F noch gewaschen bzw. anderweitig behandelt werden kann.

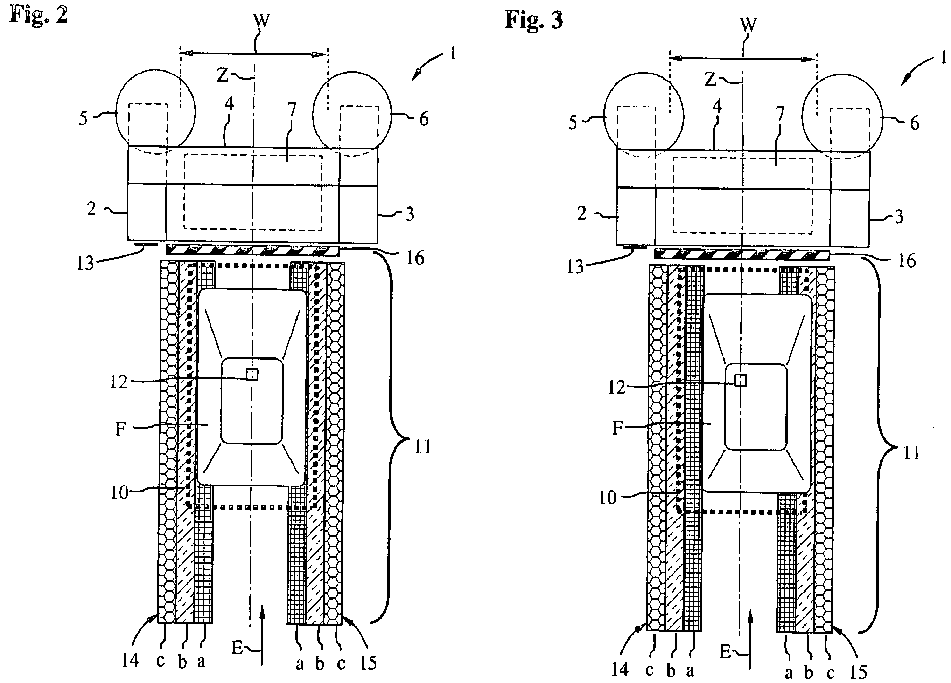

Oberhalb des Waschportals 1 und des in Fig. 2 und 3 bezeichneten Einfahrbereichs 11 ist eine als digitale Videokamera ausgebildete Kamera 12 angeordnet, die eine Aufnahme einer Draufsicht des Einfahrbereichs 11 samt darin befindlichem Fahrzeug F aufnehmen kann.

In der vorliegenden Ausführung der Erfindung kann, wie insbesondere aus Fig. 1 ersichtlich, die Kamera 12 den Einfahrbereich 11 in seiner gesamten Breite und Länge aufnehmen. Hierzu ist die Kamera 12 mittig zum Waschportal 1 und insbesondere zur lichten Behandlungsweite W ausgerichtet, liegt also in einer gedachten Zentralebene Z, die parallel zur Einfahrrichtung E und mittig zum Waschportal 1 und insbesondere zur lichten Behandlungsweite W verläuft.

Fährt das Fahrzeug F im Einfahrbcreich 11, so wird durch das Fahrzeug F ein Teil des Einfahrbereichs 11 verdeckt, und zwar mehr als durch die in Fig. 2 und 3 gezeigte reine Fahrzeugkontur. Die Größe dieses zusätzlich verdeckten Bereichs hängt von der Höhe, in der die Kamera 12 über dem Einfahrbereich 11 montiert ist, sowie der Breite des Fahrzeugs F ab. Um auch die abgedeckten Bereiche aufnehmen zu können, können vorteilhaft zwei quer zur Einfahrrichtung E versetzte Kameras verwendet werden, deren Aufnahmen dann aufgrund der bekannten ortsfesten Montierung der Kameras einfach in einer Bildauswertungseinheit kombiniert werden können. Ist der Einfahrbereich sehr lang, können auch mehrere Kameras in Einfahrrichtung E versetzt montiert sein, z.B. in der Zentralebene Z hintereinander und gegebenenfalls auch zusätzlich beidseits der Zentralebene Z. Maßgeblich ist, dass die Kameras den Einfahrbcreich 11 einschließlich des einfahrenden Fahrzeugs F so aufnehmen können, dass aus den Aufnahmen eine Draufsicht von oben erzeugt werden kann.

Im vorliegenden Ausführungsbeispiel ist die Portalwaschanlage in einer nicht gezeichneten Waschhalle aufgestellt, an deren Decke die Kamera 12 befestigt ist. Alternativ kann die Kamera 12 auch an einem Gerüst oder ähnlichen Einrichtungen befestigt sein.

Die von der Kamera 12 aufgenommene Aufnahme des Einfahrbereichs 11 und des Fahrzeugs F wird an einer als Bildschirm 13 ausgebildeten Anzeigevorrichtung angezeigt. Der Bildschirm 13 ist an der in Fig. 1 linken Portalsäule 2 so angebracht, dass er vom Fahrer des Fahrzeugs F während des gesamten Einfahrvorgangs betrachtet werden kann. Bei einem sehr langen Einfahrbereich 11 kann vorzugsweise auch eine weitere Anzeigevorrichtung in Einfahrrichtung E vor dem an der Portalsäule 2 angebrachten Bildschirm 13 vorgesehen werden. Zudem können vorteilhaft auch an beiden Portalsäulen 2, 3, der Portaltraverse 4, auf beiden Seiten und/oder oberhalb des Einfahrbereichs 11 Anzeigevorrichtungen vorgesehen werden.

Wie aus Fig. 2 und 3 hervorgeht, ist am Boden B der Portalwaschanlage eine Markierung in Form von Einfahrmarkierungsstreifen 14, 15 sowie einer Stoppmarkierung 16 vorgesehen. Die Markierung kann durch Eingießen in den Boden B, durch Aufmalen oder andere geeignete Arten hergestellt werden.

Die Einfahrmarkierungsstreifen 14, 15 verlaufen längs des Einfahrbereichs 11 parallel zur Einfahrrichtung E und parallel und symmetrisch zur Zentralebene Z. Beide Einfahrmarkierungsstreifen 14, 15 weisen drei optisch unterschiedlich gekennzeichnete Streifen 14a, 14b, 14c bzw. 15a, 15b und 15c auf, die ebenfalls symmetrisch zur Zentralebene Z in den Einfahrmarkierungsstreifen 14 bzw. 15 angeordnet sind. Im Weiteren wird deshalb, soweit möglich und sinnvoll, lediglich der in Fig. 2 und 3 linke Einfahrmarkierungsstreifen 14 beschrieben, die entsprechenden Ausführungen gelten gleichermaßen auch für den rechten Einfahrmarkierungsstreifen 15.

Der bezüglich der Zentralebene Z innere Streifen 14a weist ein vom Fahrer des Fahrzeugs F beim Einfahren in den Einfahrbereich 11 gut erkennbares Karomuster auf grünem Untergrund auf. Der mittlere Streifen 14b ist mit schrägdiagonalen Linien auf gelbem Untergrund ausgestaltet, während der äußere Streifen 14c eine Wabenstruktur auf rotem Untergrund aufweist. Der Einfahrmarkierungsstreifen 14 ist also von innen nach außen in den bekannten Ampelfarben gefasst, was vorteilhaft ist, da den Fahrern dies Farbfolge vertraut ist und sie aufgrund ihrer Signalwirkung in die mittige, zentrierte Stellung lenkt.

Die Stoppmarkierung 16 ist als diagonal in schwarz-gelben Farben gestreifter Balken am vorderen Ende des Einfahrbereichs 11 im Boden der Portalwaschanlage angebracht und verläuft quer zur Einfahrrichtung E und zentriert zur Zentralebene Z. Die Breite der Stoppmarkierung 16 entspricht vorliegend der lichten Weite zwischen den Portalsäulen 2, 3, also der maximal möglichen Fahrzeugbreite. Hierdurch kann der Fahrer des Fahrzeugs F in der im Bildschirm 13 angezeigten Aufnahme schnell und zuverlässig feststellen, ob sein Fahrzeug F zu breit für die Portalwaschanlage ist.

Bevorzugt ist die Stoppmarkierung 16 anders gezeichnet als die Einfahrmarkierungsstreifen 14, 15. Zudem ist es vorteilhaft, wenn zwischen dem vorderen Ende der Einfahrmarkierungsstrcifen 14, 15 und der Stoppmarkierung 16 in Einfahrrichtung E ein geringer Abstand besteht.

Die Funktionsweise der Erfindung, insbesondere der Markierung 14, 15, 16, wird nun anhand von Fig. 1a, 2 und 3 erläutert.

Während des Einfahrens des Fahrzeugs F in die Portalwaschanlage wird mit der Kamera 12 kontinuierlich eine Aufnahme der Draufsicht des Einfahrbereichs 11 aufgenommen, also auch das einfahrende Fahrzeug F. Diese Aufnahme wird unmittelbar, also in Echtzeit am Bildschirm 13 angezeigt. Zur Unterscheidung der realen Bestandteile der Portalwaschanlage von deren Abbildungen in der am Bildschirm 13 angezeigten Aufnahme werden letztere durch einen Apostroph an den Bezugsziffern der realen Bestandteile bezeichnet, wobei in Fig. 1a aus Gründen der Übersichtlichkeit die Aufnahme nur schematisch dargestellt ist. Tatsächlich zeigt die am Bildschirm 13 angezeigte Aufnahme eine vollständige Abbildung des von der Kamera 12 aufgenommenen Bereichs, einschlieβlich eines evtl. einfahrenden Fahrzeugs F. In Fig. 1a auch dargestellt sind die verdeckten Bereichs des Bodens B um das Fahrzeug F, die wie oben beschrieben aufgrund der Aufnahme mit der einen, zentrierten Kamera 12 nicht aufgenommen werden können.

Die Aufnahme im Bildschirm 13 zeigt das Waschportal 1 mit seinen Bestandteilen, nämlich Portalsäulen 2', 3', Portaltraverse 4', vertikalen Seitenbürsten 5' und 6' sowie Horizontalwaschbürste 7'. Weiter sind auf dem Bildschirm 13 die aufgenommenen Einfahrmarkierungen 14', 15' sowie die Stoppmarkierung 16' zu erkennen. Auch zeigt die Aufnahme die Abbildung des Fahrzeugs F', wobei selbstverständlich auch eine Bewegung des Fahrzeugs F im Einfahrbereich 11 angezeigt wird.

In einer zeichnerisch nicht dargestellten Ausführung können alle während des Einfahrens des Fahrzeugs F ortsfesten Bestandteile der Portalwaschanlage im Bildschirm 13 auch zusätzlich oder ausschließlich "virtuell" dargestellt werden, da die Position der Kamera 12 sowie des Waschportals 1 in seiner Ruhestellung vor dem Waschen, wie auch die Position der Einfahrmarkierung 14 und 15 sowie der Stoppmarkierung 16 ortsfest miteinander verknüpft sind. Beispielsweise können die Einfahrmarkierungsstreifen 14', 15' und/oder die Stoppmarkierung 16' softwaremäßig erzeugt und in die digitale Aufnahme der Kamera 12 eingeblendet werden, so dass auch die wie oben beschrieben durch das Fahrzeug F verdeckten Bereiche des Bodens B neben dem Fahrzeug F angezeigt werden können.

Die Abbildung F' des echten Fahrzeugs F durch die Kamera 12 hingegen wird direkt im Bildschirm 13 abgebildet, so dass keine aufwändigen Messungen oder rechenzeitintensiven Berechnungen eines "virtuellen" Fahrzeugs vorgenommen werden müssen. Vielmehr wird dem Fahrer des Fahrzeugs F durch die Aufnahme der Kamera 12 sein Einfahren im Einfahrbereich 11 in Bezug auf die reale Markierungen 14, 15, 16 und ggf. virtuelle Markierungen 14', 15', 16' unmittelbar angezeigt. Der Fahrer kann folglich notwendige Fahrrichtungskorrekturen sofort erkennen, entsprechend Lenkkorrekturen durchführen und sieht unmittelbar die Folge der Lenkkorrekturen. Auch kann er unmittelbar erkennen, wie groß die Abweichungen von der idealen Behandlungsposition sind und die Lenkkorrekturen entsprechend anpassen. Ein Übersteuern wird hierdurch vorteilhaft verhindert. Zudem kann der Fahrer beim Einfahren die Grobabstimmung aufgrund der am Boden B aufgebrachten Markierungen 14, 15, 16 vornehmen, und die Feinabstimmung von Lenkkorrekturen dann aufgrund der im Bildschirm 13 angezeigten Aufnahme durchführen.

Fig. 2 und 3 zeigen je einen Einfahrvorgang des Fahrzeugs F, jeweils mit unterschiedlichen Positionen des Fahrzeugs F im Einfahrbereich 11.

In Fig. 2 befindet sich das Fahrzeug F gegen Ende des Einfahrvorgangs optimal zentriert bezüglich der Zentrallinie Z zwischen dem linken und rechten Einfahrmarkierungsstreifen 14 bzw. 15, also in seitlich optimaler Waschposition. Dies wird dem Fahrer in Fig. 1a angezeigt, der somit unmittelbar und ausschließlich durch Betrachten des Bildschirms 13 erkennen kann, dass er keine Lenkkorrekturen vornehmen muss. Weiter erkennt der Fahrer am Bildschirm 13, dass er noch eine kurze Strecke nach vorne fahren muss, bis er die Stoppmarkierung 16 erreicht und sein Fahrzeug somit in der optimalen Behandlungsposition steht. Ohne die Abbildung des Einfahrbereichs 11 samt Fahrzeugs F in der Aufnahme im Bildschirm 13 könnte der Fahrer diesen kurzen Abstand nicht erkennen, denn die am Boden B befindliche Stoppmarkierung 16 würde durch die Motorhaube des Fahrzeugs F verdeckt.

Bei bekannten Fahrzeugwaschanlagen sind zur Erzeugung eines Stoppsignals an Stelle der Stoppmarkierung 16 in Einfahrrichtung E hintereinander zwei Lichtschranken vorgesehen wobei die in Einfahrrichtung E vordere Lichtschranke bei Überfahren dem Fahrer ein Stoppsignal gibt. Hält er aufgrund seiner Reaktionszeit nicht schnell genug an, sondern überfährt auch die zweite, nachfolgende Lichtschranke, so würde ein Signal "Zurückfahren" angezeigt. Der Fahrer müsste dann das Fahrzeug F zurücksetzen, wobei viele Fahrer hier zu weit zurückfahren, so dass die ganze Prozedur mit erneutem nach vorne Fahren wieder von vorne beginnt und unter Umständen sogar mehrmals wiederholt werden muss.

In Fig. 3 befindet sich das Fahrzeug zu weit rechts der Zentralebene Z, was der Fahrer anhand der Draufsicht im Bildschirm 13 (nicht zeichnerisch dargestellt) schnell erkennen kann. Gleichermaßen kann er jedoch erkennen, dass das Fahrzeug noch ohne Beschädigung gereinigt werden kann, unter Umständen mit schlechterem Reinigungsergebnis. Auch erkennt er, dass er auf der kurzen verbleibenden Strecke zur Stoppmarkierung 16 das Fahrzeug F nicht mehr in eine bessere Behandlungsposition bringen kann, sondern zurückstoßen und den Einfahrvorgang wiederholen müsste. Hierdurch wird vermieden, dass der Fahrer durch unnötige und nicht sinnvolle Lenkkorrekturen am Ende des Einfahrvorgangs sein Fahrzeug F noch schlechter positioniert, als es ohnehin bereits positioniert ist. Wäre das Fahrzeug F bei dem in Fig. 3 dargestellten seitlichen Versatz nach rechts noch am Anfang des Einfahrbereichs 11, so könnte der Fahrer sofort erkennen, dass er durch eine mittlere Lenkbewegung nach links und späteres Einlenken in Einfahrrichtung E das Fahrzeug F leicht in die zentrale und mittige Behandlungsposition bezüglich der Zentralebene Z bringen könnte.

Durch die schnell erfassbare Abbildung des Fahrzeugs F in der Aufnahme im Bildschirm 13 bezüglich der Markierungen 14, 15, 16 bzw. 14', 15', 16' kann der Fahrer das Fahrzeug F schnell, kontrolliert und vor allem an den Grad einer evtl. Fehlstellung angepasst in die gewünschte Behandlungsposition bringen. Insbesondere ist er nicht auf evtl. mit kurzer zeitlicher Verzögerung angezeigte Richtungssignale angewiesen, auf die er dann durch einen Lenkanschlag reagieren muss. Auch sieht der Fahrer unmittelbar den Erfolg seiner Lenkkorrekturen.

Da bei der überwiegenden Mehrzahl der Fahrzeuge der Fahrer nicht in der Mitte des Fahrzeugs sitzt, sondern rechts oder links davon, muss er aufgrund der Anzeige des Fahrzeugs F im Bildschirm 13 auch nicht den Versatz zwischen der gedachten Zentralebene Z und seiner Sitzposition ausgleichen, was nur wenigen Fahrern auf Anhieb bzw. überhaupt gelingt.

## Patentansprüche

1. Fahrzeugbehandlungsanlage mit einem Einfahrbereich (11) für ein zu behandelndes Fahrzeug (F), einem längs einer Einfahrrichtung (E) verfahrbaren Behandlungsportal (1), und mindestens einer Kamera (12) zur Erzeugung einer Aufnahme des Einfahrbereichs (11) und Fahrzeugs (F), **gekennzeichnet durch** eine für einen Fahrer des Fahrzeugs (F) während der Einfahrt sichtbare Anzeigevorrichtung (13) zur Anzeige der Aufnahme und mindestens einer Markierung (14, 15, 16; 14', 15', 16').

2. Fahrzeugbehandlungsanlage nach Anspruch 1, **dadurch gekennzeichnet, dass** die Kamera (12) oberhalb des Einfahrbereichs (11) angebracht ist.

3. Fahrzeugbehandlungsanlage nach einem der voranstehenden Ansprüche, **dadurch gekennzeichnet, dass** die Kamera (12) eine zur Erzeugung bewegter Bilder eingerichtete Kamera ist.

4. Fahrzeugbehandlungsanlage nach einem der voranstehenden Ansprüche, **dadurch gekennzeichnet, dass** die Markierung (14-16; 14'-16') ganz oder zum Teil physikalisch im Einfahrbereich (11) angebracht und/oder ganz oder zum Teil virtuell in die Aufnahme eingeblendet ist.

5. Fahrzeugbehandlungsanlage nach einem der voranstehenden Ansprüche, **dadurch gekennzeichnet, dass** die Markierung (14-16; 14'-16') eine am in Einfahrrichtung (E) vorderen Ende des Einfahrbereichs (11) quer zur Einfahrrichtung (E) verlaufende Stoppmarkierung (16; 16') umfasst.

6. Fahrzeugbehandlungsanlage nach Anspruch 5, **dadurch gekennzeichnet, dass** die Stoppmarkierung (16; 16') quer zur Einfahrrichtung (E) so breit ist wie eine lichte Behandlungsweite (W) zwischen Portalsäulen (2, 3) des Behandlunasportals (1), und/oder dass die Stoppmarkierung (16) ein am Boden (B) des Einfahrbereichs (11) quer zur Einfahrrichtung (E) angebrachter Querbalken ist.

7. Fahrzeugbehandlungsanlaae nach einem der Ansprüche 1 bis 6, **dadurch gekennzeichnet, dass** die Markierung mindestens eine längs der Einfahrrichtung (E) verlaufende Einfahrmarkierung umfasst.

8. Fahrzeugbehandlungsanlage nach einem der Ansprüche 1 bis 6, **dadurch gekennzeichnet, dass** die Markierung (14, 15; 14', 15') zwei längs der Einfahrrichtung (E) verlaufende Einfahrmarkierungsstreifen (14, 15; 14', 15') aufweist, die symmetrisch zu einer parallel zur Einfahrrichtung (E) und zentriert zum Behandlungsportal (1) verlaufenden Zentralebene (Z) ausgerichtet sind.

9. Fahrzeugbehandlungsanlage nach Anspruch 8, **dadurch gekennzeichnet, dass** die Einfahimarkierungsstreifen (14, 15; 14', 15') jeweils mindestens zwei in Einfahrrichtung (E) verlaufende, optisch unterschiedlich ausgestaltete Streifen (14a, 14b, 14c, 15a, 15b, 15c) aufweisen, und/oder dass die Einfahrmarkierung oder Einfalu-markierungsstreifen (14, 15) am Boden des Einfahrbereichs (11) angebracht sind.

10. Fahrzeugbehandlungsanlage nach einem der voranstehenden Ansprüche, **dadurch gekennzeichnet, dass** die Anzeigevorrichtung (13) ein im Fahrzeug (F) vorgesehenes Bildschirmsystem aufweist, wobei die Aufnahme sowie die Anzeige der Markierung (14-16; 14'-16') drahtlos an das Bildschirmsystem übertragbar sind.

11. Verfahren zum Betrieb einer Fahrzeugbehandlungsanlage mit einem Einfahrbereich (11) für ein zu behandelndes Fahrzeug (F), einem längs einer Einfahrrichtung (E) verfahrbaren Behandlungsportal (1), und mindestens einer Kamera (12), wobei eine für den Fahrer des Fahrzeugs (F) während der Einfahrt sichtbare Anzeigevorrichtung (13) vorgesehen ist, und das Verfahren den folgenden Schritt aufweist,
a) Erzeugen einer Aufnahme des Einfahrbereichs (11) und Fahrzeugs (F) mit der Kamera (12), **gekennzeichnet durch** den Schritt
b) Anzeigen der Aufnahme und mindestens einer Markierung (14-16; 14'-16') in der Anzeigevorrichtung (13).

12. Verfahren nach Anspruch 11, **dadurch gekennzeichnet, dass** die Fahrzeugbehandlunosanlaoe nach einem der Ansprüche 1 bis 10 ausgebildet ist.

13. Verfahren nach Anspruch 11 oder 12, **dadurch gekennzeichnet, dass** in Schritt a) eine Draufsicht auf das Fahrzeug (F) von oben aufgenommen wird.

14. Verfahren nach einem der Ansprüche 11 bis 13, **dadurch gekennzeichnet, dass** die Aufnahme in Schritt a) eine kontinuierliche Videoaufnahme ist.

15. Verfahren nach einem der Ansprüche 12 bis 14, **dadurch gekennzeichnet, dass** die Markierung (14-16; 14'-16') ganz oder zum Teil physikalisch im Einfahrbereich (11) angebracht ist und mit der Aufnahme durch die Kamera (12) aufgenommen wird und/oder ganz oder zum Teil virtuell in die Aufnahme eingeblendet wird.

## Claims

1. Vehicle treatment installation with a drive-in area (11) for a vehicle (F) to be treated, a treatment portal (1) which can travel longitudinally in relation to a drive-in direction (E), and at least one camera (12) for producing a recording of the drive-in area (11) and vehicle (F), **characterised by** a display device (13) which is visible to a driver of the vehicle (F) while driving in and for displaying the recording and at least one mark (14, 15, 16; 14', 15', 16').

2. Vehicle treatment installation according to claim 1, **characterised in that** the camera (12) is mounted above the drive-in area (11).

3. Vehicle treatment installation according to one of the preceding claims, **characterised in that** the camera (12) is a camera set up for producing moving images.

4. Vehicle treatment installation according to one of the preceding claims, **characterised in that** the mark (14-16; 14'-16') is physically fitted wholly or partly in the drive-in area (11) and/or virtually superimposed wholly or partly on the recording.

5. Vehicle treatment installation according to one of the preceding claims, **characterised in that** the mark (14-16; 14'-16') comprises a stop mark (16; 16') running transversely to the drive-in direction (E) at the front end of the drive-in area (11) in the drive-in direction (E).

6. Vehicle treatment installation according to claim 5, **characterised in that** the stop mark (16; 16') transversely to the drive-in direction (E) is as wide as a clear treatment width (W) between portal uprights (2, 3) of the treatment portal (1), and/or **in that** the stop mark (16) is a transverse beam fitted transversely to the drive-in direction (E) on the ground (B) in the drive-in area (11).

7. Vehicle treatment installation according to one of claims 1 to 6, **characterised in that** the mark comprises at least one drive-in mark running longitudinally in relation to the drive-in direction (E).

8. Vehicle treatment installation according to one of claims 1 to 6, **characterised in that** the mark (14, 15; 14', 15') comprises two drive-in marking stripes (14, 15; 14', 15') which run longitudinally in relation to the drive-in direction (E) and are aligned symetrically in relation to a central plane (Z) running parallel to the drive-in direction (E) and centred in relation to the treatment portal (1).

9. Vehicle treatment installation according to claim 8, **characterised in that** in each case the drive-in marking stripes (14, 15; 14', 15') comprise at least two stripes (14a, 14b, 14c, 15a, 15b, 15c) of different optical form running in the drive-in direction (E), and/or **in that** the drive-in mark or drive-in marking stripes (14, 15) are fitted on the ground in the drive-in area (11).

10. Vehicle treatment installation according to one of the preceding claims, **characterised in that** the display device (13) comprises a display screen system provided in the vehicle (F), and the recording and the display of the mark (14-16; 14'-16') can be transmitted wirelessly to the display screen system.

11. Method for operating a vehicle treatment installation with a drive-in area (11) for a vehicle (F) to be treated, a treatment portal (1) which can travel longitudinally in relation to a drive-in direction (E), and at least one camera (12), wherein a display device (13) is provided visible to the driver of the vehicle (F) while driving in, the method comprising the following step,
a) production of a recording of the drive-in area (11) and vehicle (F) with the camera (12),
**characterised by** the step
b) display of the recording and at least one mark (14-16; 14'-16') in the display device (13).

12. Method according to claim 11, **characterised in that** the vehicle treatment installation is embodied according to one of claims 1 to 10.

13. Method according to claim 11 or 12, **characterised in that** in step a) a plan view of the vehicle (F) is recorded from above.

14. Method according to one of claims 11 to 13, **characterised in that** the recording in step a) is a continuous video recording.

15. Method according to one of claims 12 to 14, **characterised in that** the mark (14-16'; 14'-16') is physically fitted wholly or partly in the drive-in area (11) and is recorded with the recording by the camera (12) and/or is virtually superimposed wholly or partly on the recording.

## Revendications

1. Installation de traitement de véhicules avec une zone d'entrée (11) pour un véhicule (F) à traiter, un portique de traitement (1) déplaçable le long du sens d'entrée (E), et au moins une caméra (12) pour la génération d'un enregistrement de la zone d'entrée (11) et du véhicule (F), **caractérisée par** un dispositif d'affichage (13) visible par un conducteur du véhicule (F) pendant l'entrée, destiné à afficher l'enregistrement et au moins un marquage (14, 15, 16 ; 14', 15', 16').

2. Installation de traitement de véhicules selon la revendication 1, **caractérisée en ce que** la caméra (12) est montée au-dessus de la zone d'entrée (11).

3. Installation de traitement de véhicules selon l'une quelconque des revendications précédentes, **caractérisée en ce que** la caméra (12) est une caméra conçue pour la génération d'images en mouvement.

4. Installation de traitement de véhicules selon l'une quelconque des revendications précédentes, **caractérisée en ce que** le marquage (14-16 ; 14', 16') est monté entièrement ou en partie physiquement dans la zone d'entrée (11) et/ou est superposé entièrement ou en partie virtuellement dans l'enregistrement.

5. Installation de traitement de véhicules selon l'une quelconque des revendications précédentes, **caractérisée en ce que** le marquage (14-16 ; 14'-16') comporte un marquage d'arrêt (16 ; 16') s'étendant sur l'extrémité avant dans le sens d'entrée (E) de la zone d'entrée (11) transversalement au sens d'entrée (E).

6. Installation de traitement de véhicules selon la revendication 5, **caractérisée en ce que** le marquage d'arrêt (16 ; 16') transversalement au sens d'entrée (E) est aussi large qu'une largeur intérieure de traitement (W) entre des colonnes (2, 3) du portique de traitement (1), et/ou **en ce que** le marquage d'arrêt (16) est une barre transversale montée sur le sol (B) de la zone d'entrée (11) transversalement au sens d'entrée (E).

7. Installation de traitement de véhicules selon l'une quelconque des revendications 1 à 6, **caractérisée en ce que** le marquage comporte au moins un marquage d'entrée s'étendant le long du sens d'entrée (E).

8. Installation de traitement de véhicules selon l'une quelconque des revendications 1 à 6, **caractérisée en ce que** le marquage (14, 15 ; 14', 15') présente deux bandes de marquage d'entrée (14, 15 ; 14', 15') s'étendant le long du sens d'entrée (E), qui sont orientés symétriquement à un plan central (Z) s'étendant parallèlement au sens d'entrée (E) et de manière centrée par rapport au portique de traitement (1).

9. Installation de traitement de véhicules selon la revendication 8, **caractérisée en ce que** les bandes de marquage d'entrée (14, 15 ; 14', 15') présentent chacune au moins deux bandes (14a, 14b, 14c, 15a, 15b, 15c) s'étendant dans le sens d'entrée (E), configurées différemment optiquement, et/ou **en ce que** le marquage d'entrée ou les bandes de marquage d'entrée (14, 15) sont montées sur le sol de la zone d'entrée (11).

10. Installation de traitement de véhicules selon l'une quelconque des revendications précédentes, **caractérisée en ce que** le dispositif d'affichage (13) présente un système d'écran prévu dans le véhicule (F), sachant que l'enregistrement ainsi que l'affichage du marquage (14-16 ; 14'-16') peuvent être transmis sans fil au système d'écran.

11. Procédé de fonctionnement d'une installation de traitement de véhicules avec une zone d'entrée (11) pour un véhicule (F) à traiter, un portique de traitement (1) déplaçable le long d'un sens d'entrée (E), et au moins une caméra (12), sachant qu'un dispositif d'affichage (13) visible par le conducteur du véhicule (F) pendant l'entrée est prévu et le procédé présente l'étape suivante,
a) génération d'un enregistrement de la zone d'entrée (11) et du véhicule (F) avec la caméra (12), **caractérisé par** l'étape suivante
b) affichage de l'enregistrement et au moins d'un marquage (14-16 ; 14'-16') dans le dispositif d'affichage (13).

12. Procédé selon la revendication 11, **caractérisé en ce que** l'installation de traitement de véhicules est réalisée selon l'une quelconque des revendications 1 à 10.

13. Procédé selon la revendication 11 ou 12, **caractérisé en ce qu'**une vue en élévation du véhicule (F) est enregistrée de dessus à l'étape a).

14. Procédé selon l'une quelconque des revendications 11 à 13, **caractérisé en ce que** l'enregistrement de l'étape a) est un enregistrement vidéo continu.

15. Procédé selon l'une quelconque des revendications 12 à 14, **caractérisé en ce que** le marquage (14-16 ; 14'-16') est monté entièrement ou en partie physiquement dans la zone d'entrée (11) et est enregistré avec l'enregistrement par la caméra (12) et/ou est superposé entièrement ou en partie virtuellement dans l'enregistrement.
